# EUROPEAN PATENT SPECIFICATION

(11) **EP 3 145 698 B1**
(45) Date of publication and mention of the grant of the patent: **28.12.2022**
(21) Application number: 14738915.9
(22) Date of filing: 23.06.2014
(51) Int. Cl.: B29C 64/106, B29C 64/118, B33Y 30/00

(54) **SYSTEM FOR PREPARING A 3D PRINTER PRINTOUT BASE AND A METHOD OF PREPARING A 3D PRINTER PRINTOUT BASE**
SYSTEM ZUR HERSTELLUNG EINER DRUCKBASIS FÜR EINEN 3D-DRUCKER UND VERFAHREN ZUR HERSTELLUNG EINER DRUCKBASIS FÜR EINEN 3D-DRUCKER
SYSTÈME DE PRÉPARATION D'UNE BASE D'IMPRESSION D'UNE IMPRIMANTE 3D ET PROCÉDÉ DE PRÉPARATION D'UNE BASE D'IMPRESSION D'UNE IMPRIMANTE 3D

(30) Priority: 12.05.2014 PL 40818414
(43) Date of publication of application: 29.03.2017
(73) Proprietor: ZORTRAX SPOLKA AKCYJNA, 10-409 Olsztyn (PL)
(72) Inventor: TOMASIAK, Rafal, 10-117 Olsztyn (PL)
(74) Representative: Kancelaria Eupatent.pl Sp. z.o.o
(86) International application number: PCT/PL2014/000065
(87) International publication number: WO 2015/174867

(56) References cited:
- US-A1- 2007 228 592
- US-A1- 2013 242 317
- Brian Benchoff: "Automated bed leveling with our 3D printer", , 23 April 2012 (2012-04-23), XP002733911, Retrieved from the Internet: URL:https://www.youtube.com/watch?v=kpatyP vD5oU [retrieved on 2014-12-16]

## Description

The subject of the invention is a system for preparing a 3D printer printout base and a method of preparing a 3D printer printout base.

Printing, using a 3D printer, requires preparing a base on which the printout is placed and their proper orientation within the working space of the printing head (extruder). The process is called calibration and precedes the printing process itself. Placement of the printout base plane non-parallely to toe plane of movement of the print head or deformation of the base plate may result in an incorrect printout, as well as in the damage to the print head and its drive, resulting from an unanticipated collision between the base and the print head.

Methods of calibration are known, described usually in the operating manual (instructions for use) of 3D printers currently on the market, e.g. *SYGNIS,* Felix 2.0 by FELIX Printers, consisting in levelling the printout base in relation to the print head movement plane, through adjustment using mechanical retainers. The levelling is performed manually through the change of geometry of retainers, e.g. by rotating an adjustment screw.

It is known from publications: Brian Benchoff: "Automated bed leveling with our 3D printer", 23 April 2012 and retrieved from the Internet (film), in which described a printer with voltage connected to the probe and platform made from a conducting metal plate. The measurement of calibration points is performed by moving to a specific "X", "Y" point, and then by moving probe towards the platform in the "Z" axis until both parts touch. Contact will result in closing the electrical circuit (the probe is made of conducting material). The "X", "Y" coordinates of the contact point are recorded. A measurement is then made in another location of the platform. This results in a set of calibration point coordinates, used to establish the unevenness of the platform in the "Z" axis.

The main reason for the onerousness of a manual calibration process is the necessity of multiple verification of the obtained calibration result through trial and error. In practical use described, e.g. in the SYGNIS printer manual, the verification consists in checking the dimension of the gap between the print head and the base using a feeler gauge. In the quoted manual, a sheet of paper acts as a feeler gauge and the appropriate dimension of the gap corresponds with a situation where a sheet of paper placed between the head and the base may move with "slight resistance". Both the feeler gauge and the measure used to establish the possibility of movement are by its very nature highly inaccurate.

The present invention relates to a system and a method for preparing a printout base for a 3D printer according to the appended claims.

The printer table is connected sequentially with a table drive, table drive controller and printer controller and recorder.

In accordance with the invention the method of preparing a 3D printer printout base is characterized in that an automatic compensation of deviation of the upper table surface in the "Z" axis is performed by measurement of the location of the printer table being conducted in the vertical axis "Z" with the established locations of the printer head in the "XY" plane over at least 3 base points. When the contact detection circuit is closed the "X", "Y", "Z" coordinates are stored in the printer memory and based on the obtained coordinates describing the table surface the printout base is printed, that is, the raft, taking into account corrections to compensate the deviations in the "Z" axis of the table geometry compared to the "XY" plane of the movement of the head with nozzle.

The advantage of the use of the system and method covered by the invention is the elimination of tedious and time-consuming manual calibration activities related to the preparation of the printer for work, by replacing them with automatic calibration supervised by an electronic printer controller.

The subject of the invention will be presented based on an example of implementation on figures, where fig. 1 presents the diagram of the system, fig. 2 presents the method of preparing a printout and fig. 3 a printer table with five base points.

The system for preparing a 3D printer printout base is characterised by at least three base points 2 being placed on a printer table 1 in such a manner that the upper surface of the table 1 and the surface of the base points 2 form a uniform plane. The points 2 are connected with each other by an electric wire 3, which connects to a nozzle 4 of a head 5 by a power supply 6, creating a contact detection circuit 7. The head 5 is connected sequentially with the head 5 drive 8, head drive 5 controller 9 and a printer controller 10. The printer controller 10 is equipped with a coordinate recorder 11 and a memory 12. A contact detection circuit 7 is connected by a potential signalling line 13 with a printer recorder 11 or a contact detection circuit 7 is equipped with an element 14 detecting current flow connected by a line 15 with the printer recorder 11. The printer table 1 is connected with a table drive 16, table drive controller 17 and printer controller 10.

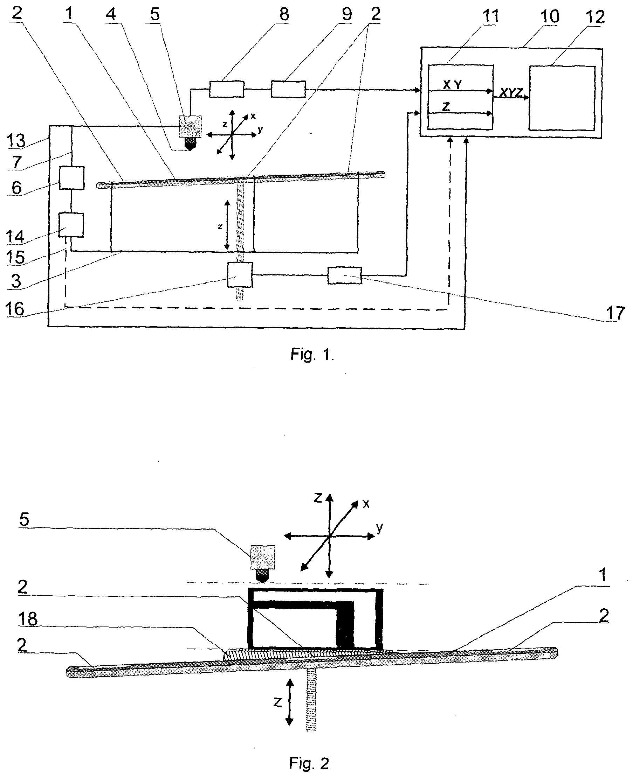

The contact of the nozzle 4 of the print head 5 with any base point 2 will close the electric circuit 7. The electric circuit 7 closed condition in the location of contact of the nozzle 4 and the base point 2 is signalled to the coordinate recorder 11 of the printer controller 10 by the contact detection system 7. The contact detection system 7 may be implemented in any manner, e.g. by sending a signal corresponding to the electric potential on wire 3 to the input of the printer controller 10 position recorder 11 - signal line marked by a symbol on fig. 1 by a continuous line 13, as the one which occurs in a situation where the circuit is closed by the nozzle 4 contacting the base point 2, or e.g. by an electric signal created by element 14 detecting the flow of electric current supplied to the input of coordinate recorder 11 marked on fig. 1 by a dashed line 15. The task of the recorder 11 is to record the three "X", "Y", "Z" coordinates corresponding to the position of print nozzle 4 end in the printer controller 10 memory 12. The coordinate values are obtained from the print head drive 8 controller 9 (in the "XY" plane) and the table 1 drive 16 controller 17 in the "Z" axis. The recorder system 11 and the drive controllers 9 and 17 may form an integral part of the printer controller 10, but may also be constructed as separate modules.

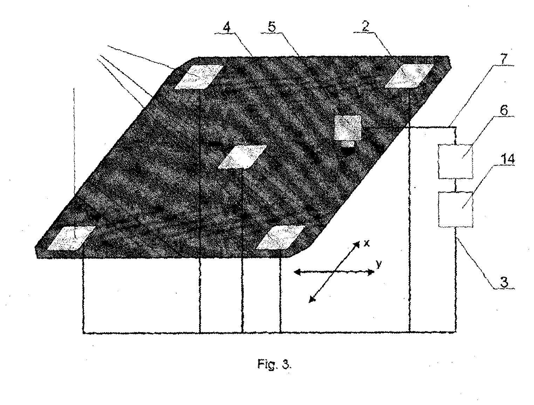

In the case the surface of table 1 is deformed, e.g. as a result of repeated thermal action, the number of base points 2 should be increased in order to establish additional planes which determine this surface. In an example design of table 1 presented on fig. 3 in order to increase the measurement accuracy 5 base points were used.

The system for preparing the 3D printer printout base acts in the following manner: the printer controller 10 places the print head 5 over point 2 for arbitrary "X", "Y" coordinates. Table 1 moves around the "Z" axis of the print head 5 with the head remaining stationary. The stopping of table 1 occurs when the contact detection circuit 7 is closed. The circuit closing signal initiates the recording of "X", "Y" coordinates of print nozzle 4 and "Z" of base point 2 of the table 1 surface. These actions are repeated for each of 2 base points. The subsequent stage is the printing of the printout base 18 - raft, taking into account the corrections of the head 5 movement trajectory concerning the geometry of contact area between the plane of table 1 and raft 18 obtained as a result of conducted measurements of location of base points 2.

The method of preparing a 3D printer printout base is characterised by a measurement of the location of the printer table 1 being conducted in the vertical axis "Z" with the established locations of the printer head 5 in the "XY" plane over at least 3 base points 2. When the contact detection circuit 7 is closed the "X", "Y", "Z" coordinates are stored in the printer memory, and based on the obtained coordinates describing the table surface the printout base 18 is printed, that is, the raft.

## Claims

1. A system for preparing a printout base for a 3D printer comprising:
- a printer table (1) with base points (2) connected to a nozzle (4) of a head (5) via a power supply (6), thereby forming a contact detection circuit (7);
- wherein the head (5) is connected sequentially with a head drive (8), a head controller (9) and a printer controller (10);
- wherein the printer controller (10) comprises a coordinate recorder (11) and a memory (12);
- wherein the contact detection circuit (7) is connected by a potential signaling line (13) with the printer recorder (11) or the contact detection circuit (7) comprises an element (14) detecting current flow connected by a line (15) with the printer recorder (11); and
- wherein the printer table (1) is connected with a table drive (16), a table drive controller (17) and the printer controller (11);
**characterized in that**:
- the printer table (1) comprises at least three distinctly located electrically conductive base points (2) connected with each other by an electric wire (3) which is connected to the power supply (6).

2. The system according to claim 1, wherein an upper surface of the table (1) and a surface of the base points (2) form a uniform plane.

3. A method for preparing printout base for a 3D printer **characterized by** comprising the steps of:
- providing the system according to any of claims 1-2;
- conducting a measurement of a location of the printer table (1) in the vertical axis "Z" with established locations of the printer head (5) in the "XY" plane over the at least three base points (2);
- upon detecting that the contact detection circuit (7) is closed, storing the "X, Y, Z" coordinates in the printer memory (12); and
- based on the obtained coordinates describing the table surface, printing a raft that forms the printout base (18).

## Patentansprüche

1. System zum Herstellen einer Druckbasis für einen 3D-Drucker, umfassend:
- einen Druckertisch (1) mit Basispunkten (2), die über eine Stromversorgung (6) mit einer Düse (4) eines Kopfes (5) verbunden sind, wodurch eine Kontakterfassungsschaltung (7) gebildet wird;
- wobei der Kopf (5) sequentiell mit einem Kopfantrieb (8), einem Kopfsteuergerät (9) und einem Druckersteuergerät (10) verbunden ist;
- wobei das Druckersteuergerät (10) einen Koordinatenschreiber (11) und einen Speicher (12) umfasst;
- wobei die Kontakterfassungsschaltung (7) durch eine Spannungssignalleitung (13) mit dem Druckerschreiber (11) verbunden ist oder die Kontakterfassungsschaltung (7) ein Element (14) umfasst, das einen Stromfluss erfasst, das durch eine Leitung (15) mit dem Druckerschreiber (11) verbunden ist; und
- wobei der Druckertisch (1) mit einem Tischantrieb (16), einem Tischantriebssteuergerät (17) und dem Druckersteuergerät (11) verbunden ist;
**dadurch gekennzeichnet, dass**:
- der Druckertisch (1) mindestens drei verschieden angeordnete, elektrisch leitende Basispunkte (2) umfasst, die miteinander durch einen elektrischen Draht (3) verbunden sind, der mit Stromversorung (6) verbunden ist.

2. System nach Anspruch 1, wobei eine obere Fläche des Tisches (1) und eine Fläche der Basispunkte (2) eine einheitliche Ebene bilden.

3. Verfahren zum Herstellen einer Druckbasis für einen 3D-Drucker, **gekennzeichnet durch** das Umfassen der Schritte:
- Bereitstellen eines Systems nach einem der Ansprüche 1 bis 2,
- Durchführen einer Messung einer Position des Druckertisches (1) in der vertikalen Achse "Z" mit festgelegten Positionen des Druckkopfes (5) in der "XY"-Ebene über den mindestens drei Basispunkten (2);
- beim Erfassen, dass die Kontakterfassungsschaltung (7) geschlossen ist, Speichern der "X, Y, Z"-Koordinaten im Druckerspeicher (12); und
- basierend auf den erhaltenen Koordinaten, die die Tischoberfläche beschreiben, Drucken eines Rafts, das die Druckbasis (18) bildet.

## Revendications

1. Système destiné à la préparation d'une base d'impression pour une imprimante 3D comprenant :
- une table d'imprimante (1) avec des points de base (2) raccordés à une buse (4) d'une tête (5) par l'intermédiaire d'une alimentation électrique (6), formant ainsi un circuit de détection de contact (7) ;
- ladite tête (5) étant raccordée séquentiellement à un dispositif d'entraînement de tête (8), un dispositif de commande de tête (9) et un dispositif de commande d'imprimante (10) ;
- ledit dispositif de commande d'imprimante (10) comprenant un enregistreur de coordonnées (11) et une mémoire (12) ;
- ledit circuit de détection de contact (7) étant raccordé par une ligne de signalisation de potentiel (13) à l'enregistreur d'imprimante (11) ou ledit circuit de détection de contact (7) comprenant un élément (14) détectant le flux de courant raccordé par une ligne (15) à l'enregistreur d'imprimante (11) ; et
- ladite table d'imprimante (1) étant raccordée à un dispositif d'entraînement (16) de table, un dispositif de commande (17) de dispositif d'entraînement de table et le dispositif de commande d'imprimante (11) ;
**caractérisé en ce que** :
- la table d'imprimante (1) comprend au moins trois points de base électriquement conducteurs (2) situés de manière distincte raccordés entre eux par un fil électrique (3) qui est raccordé à l'alimentation électrique (6).

2. Système selon la revendication 1, une surface supérieure de la table (1) et une surface des points de base (2) formant un plan uniforme.

3. Procédé permettant la préparation d'une base d'impression pour une imprimante 3D caractérisé en comprenant les étapes de :
- fourniture du système selon l'une quelconque des revendications 1 à 2 ;
- réalisation d'une mesure d'un emplacement de la table d'imprimante (1) dans l'axe vertical "Z" avec des emplacements établis de la tête d'imprimante (5) dans le plan "XY" sur les au moins trois points de base (2) ;
- lors de la détection que le circuit de détection de contact (7) est fermé, stockage des coordonnées "X, Y, Z" dans la mémoire d'imprimante (12) ; et
- sur la base des coordonnées obtenues décrivant la surface de table, impression d'un radeau qui forme la base d'impression (18).
